# EUROPEAN PATENT SPECIFICATION

(11) **EP 2 370 246 B1**
(45) Date of publication and mention of the grant of the patent: **01.04.2015**
(21) Application number: 09834179.5
(22) Date of filing: 21.12.2009
(51) Int. Cl.: B29C 69/00, B29C 53/40

(54) **METHOD AND ARRANGEMENT FOR MANUFACTURING AND ASSEMBLING A LARGE-SIZE FILAMENT-REINFORCED PLASTIC COMPOSITE HOLLOW BODY**
VERFAHREN UND ANORDNUNG ZUR HERSTELLUNG UND MONTAGE EINES GROSSEN FASERVERSTÄRKTEN HOHLKÖRPERS AUS KUNSTSTOFFVERBUND
PROCÉDÉ ET AGENCEMENT POUR LA FABRICATION ET L'ASSEMBLAGE D'UN CORPS CREUX COMPOSITE DE GRANDE DIMENSION EN MATIÈRE PLASTIQUE RENFORCÉE PAR DES FILAMENTS

(30) Priority: 22.12.2008 FI 20086229
(43) Date of publication of application: 05.10.2011
(73) Proprietor: Outotec Oyj, 02230 Espoo (FI)
(72) Inventor: VAARNO, Jussi, FI-02430 Masala (FI); BJÖRKSKOG, Dan, 68600 Pietarsaari (FI)
(74) Representative: Papula Oy
(86) International application number: PCT/FI2009/051020
(87) International publication number: WO 2010/072896

(56) References cited:
- DE-A1- 4 134 579
- US-A- 3 665 671
- US-A- 3 956 816
- US-A- 3 984 271

## Description

### FIELD OF INVENTION

The invention relates to a method for manufacturing and assembling a large-size filament-reinforced plastic composite hollow body. The invention also relates to an arrangement defined in the preamble of claim 11.

### BACKGROUND OF INVENTION

In the prior art, there are known methods and arrangements for manufacturing and assembling large-size filament-reinforced plastic composite hollow bodies, such as tanks and the like. The term 'large-size hollow body' here refers to elongate cylindrical objects having a diameter of the order of several meters.

The most advantageous and economical way to manufacture a hollow body casing is filament winding. In filament winding, the hollow body casing is manufactured in a filament winding device, where around a rotatable mold, i.e. mandrel, there is wound filament dipped in thermoplastic by feeding it from a filament dispenser that moves on the side of the mandrel, in the axial direction thereof, so that the filament is set in a spiraling fashion on top of the mandrel. By this technique, the hollow body casing is made essentially cylindrical in shape, and the diameter of the casing corresponds to the diameter of the finished hollow body. Filament winding has several known advantages. It is easily automatized, and the pretensioning of filaments can be controlled accurately. Moreover, the orientation of the filaments can be accurately adjusted, so that the threads in superimposed layers can be either superimposed or pointed in different directions.

In practice, there have been two alternatives for implementing large-size hollow bodies manufactured by filament winding.

A first alternative is to manufacture a hollow body on the manufacturing site, which is located far from the assembly site (for example in another locality, another country or another continent), and transport it full-sized by land, railroad and/or sea from the manufacturing site to the assembly site, which is very expensive and in practice impossible. Transport expenses in ships are charged according to the volume, which makes the transport expenses per unit of mass very expensive for large, light-weight hollow bodies. In most countries, the limit for the diameter of an object to be transported by road or rail is roughly 3.5 m.

Further, US 3956816 A provides a method for producing a storage tank from a resilient material, such as a fiber glass reinforced plastic, in which a member is formed to a cylindrical configuration at a first location, flattened to an oblate configuration and held in said oblate configuration while transported to a second location, and then released so as to resume its cylindrical configuration, whereupon by addition of a base and a top the tank is completed. The member may be formed in sections at the first location with the sections being flattened to varying degrees so as to fit one within the other during transportation. Similarly, the top and base may be cut into sections and nested with the sections of the flattened member during transportation.

Another alternative with deliveries is solving said problem of transportation by building on the assembly site a temporary filament winding plant, in which case the hollow body is manufactured to the full size on the assembly site, for example as is described in the publication US 3,470,656. The problem with this method is that the transportation of the production equipment and its erection on the assembly site, as well as its dismounting and removal is expensive and troublesome. In addition, the conditions required in filament winding, such as ambient temperature and humidity, must be controlled precisely for ensuring the quality of the end product. This can be very difficult or even impossible, owing to local weather conditions, and the quality cannot be guaranteed. In practice, the project of establishing a filament winding plant on the assembly site is problematic also because local, professionally skilled persons must be found for erecting and using the equipment. This has also made it difficult to define the prices in supply offers, because when the offers have been drafted, it has been difficult or impossible to find out the expenses of the local project established on the assembly site.

Further, US 3,984,271 discloses a method wherein large volume tubular structures, particularly such structures made of reinforced plastic, are slit longitudinally and convolutely coiled to effectively reduce their volume for shipping, handling, or storing. For further volume reducing advantage a plurality of such tubular structures are coiled together in a shippable package. The slit tubes are subsequently reunited or joined together with other tubes for a variety of end uses.

### OBJECT OF INVENTION

An object of the invention is to eliminate the above mentioned drawbacks.

A particular object of the invention is to introduce a method and arrangement that make it possible to essentially reduce freight expenses and minimize pricing risks with deliveries.

Another object of the invention is to introduce a method and arrangement that enable the manufacturing of a hollow body casing of a controlled quality in controlled conditions on a permanent manufacturing site, and its transportation to the assembly site by road, rail or sea as a regular, standard-sized freight object.

Yet another object of the invention is to introduce a method and arrangement ensuring that highly skilled labor is not needed on the assembly site.

### SUMMARY OF INVENTION

The method according to the invention is characterized by what is set forth in claim 1. Moreover, the arrangement according to the invention is characterized by what is set forth in claim 11.

According to the invention, in the method an endless casing manufactured by filament winding is cut open in the axial direction, so that two ends are formed in the casing. The casing that is cut open is rolled up for forming a transport package that has an essentially smaller diameter than the finished hollow body. The transport package is transported to the assembly site. On the assembly site, the transport package is set in an assembly stand, the outer dimensions whereof are arranged to correspond to the inside diameter of the finished hollow body. The casing is unrolled around the assembly stand, to the size of the finished hollow body, so that the casing ends are matched end-on-end. The casing ends are mutually fastened by a tight-fitting seam for forming an endless casing. Finally other required elements are attached to the casing for obtaining a finished hollow body.

According to the invention, the arrangement includes a cutting device for cutting the endless casing, manufactured by filament winding, open in the axial direction. Moreover, the arrangement includes a rolling device for rolling up the casing to form a transport package with a diameter that is essentially smaller than the diameter of the finished hollow body. In addition, the arrangement includes an assembly stand, the outside diameter of which corresponds to the inside diameter of the finished hollow body, and which is arranged to receive inside it the transport package in order to unroll the casing on top of the assembly stand.

An advantage of the invention is that owing to the transport package, where the casing is for transportation rolled up in a size that is essentially smaller than a full-sized hollow body, the transport expenses remain essentially lower than the transport expenses of a hollow body that is transported in full size, because the hollow body casing can be transported to the assembly site by road, rail or sea as a regular, standard-sized freight object. Moreover, it is an advantage that the delivery expenses are easily predicted, and offers can be priced without risks. Another advantage is that it is not necessary to transport and build a temporary filament winding equipment on the assembly site. The casing can be produced on a permanent manufacturing site, where conditions can be controlled, and thus also the quality of the end product can be guaranteed. Highly skilled labor is not needed on the assembly site.

In an embodiment of the method, the casing is manufactured by filament winding to a thickness that is selected according to the minimum bending radius required by the transport package diameter.

In an embodiment of the method, the casing is manufactured by filament winding to a thickness that is roughly 4 - 8 mm, preferably roughly 6 mm.

In an embodiment of the method, the open-cut casing is rolled up on a capstan body, to form a transport package with a diameter that is essentially smaller than the diameter of the finished hollow body. The capstan body makes it easier to handle the transport package in production, storage, transportation and assembly.

In an embodiment of the method, after the casing is on the assembly site formed to be endless in shape, on the outer track of the casing, there are fastened reinforcement elements, such as stiffening rings, stiffening ribs and the like, for improving the structural strength and rigidity of the casing. When the casing is by filament winding manufactured to a thickness that is selected according to the minimum bending radius required by the transport package diameter, said thickness is usually smaller than the one that would be needed with respect to the strength required in the finished hollow body. The missing thickness can be compensated by said reinforcement elements to be installed on the assembly site.

In an embodiment of the method, the measures of the transport package are adjusted to match a standard ISO freight container. Owing to the standardized measures, the transport expenses can be accurately predicted and calculated.

In an embodiment of the method, the transport package is transported to the assembly site in an ISO freight container. For example in a regular ISO freight container, with the following measures: length 40 feet, width 8 feet, and height 8.5 feet, there can be transported, as a transport package, the casing of a tank that is 10 meters high and has a diameter of 6 meters.

In an embodiment of the method, the transport package is on the assembly site set in a vertical position in a vertical assembly stand.

In an embodiment of the method, the capstan body is rotated around its axis for unrolling the casing around the assembly stand.

In an embodiment of the method, the casing ends are mutually fastened by laminating reinforced plastic mat in order to form a seam.

In an embodiment of the arrangement, the arrangement includes a capstan body, around which the open-cut casing can be rolled up as a transport package. The assembly stand is arranged to receive inside it the capstan body for unrolling the casing on top of the assembly stand.

In an embodiment of the arrangement, the assembly stand includes an actuator, which is arranged to rotate the capstan body.

In an embodiment of the arrangement, the assembly stand comprises a rigid frame, including a number of columns, which are mutually arranged in a circular configuration and radially with respect to the vertical central axis of the assembly stand. Moreover, the frame includes at least two spaced-apart horizontal support rings, on the inner track whereof the columns are attached, the outside diameter of the structure formed by said support rings corresponding to the inside diameter of the finished tank, and both rings being provided with an opening. A number of horizontal supports is arranged to fasten the mutually facing and adjacent columns to each other. In between the horizontal supports and inside the space defined by the support rings, there is formed a reception space for receiving the transport package inside the assembly stand, so that the outer track of the transport package touches the outer track of the rings at the openings, in which case the casing can be fed through said openings from the transport package to cover the assembly stand.

In an embodiment of the arrangement, the capstan body is provided with a shaft. A circular end flange is fastened to the shaft, and the diameter of the end flange is at least as large as the diameter of the casing wound on the capstan body. The core, around which the casing can be wound, is attached to the shaft.

In an embodiment of the arrangement, the actuator is arranged to be connected to the shaft for rotating the capstan body.

### LIST OF DRAWINGS

The invention is explained in more detail below, with reference to exemplifying embodiments and to the appended drawing, where
Figure 1 illustrates how the casing of a hollow body is manufactured according to an embodiment of the invention by filament winding on the manufacturing site,
Figure 2 illustrates the cutting of a casing by a cutting device in the lengthwise direction,
Figure 3 illustrates the device of Figure 2, viewed in the direction III-III of Figure 2,
Figure 4 illustrates an open-cut casing as set in a winding device for winding it on the capstan body,
Figure 5 illustrates the section along the line V-V in Figure 4,
Figure 6 illustrates a casing that is wound by the winding device as a transport package on the capstan body,
Figure 7 illustrates a section along the line VII-VII of Figure 6,
Figure 8 is an axonometrical illustration of the transport package of a hollow body casing, belonging to an embodiment of an arrangement according to the invention, to be used in an embodiment of the method of the invention,
Figure 9 is an axonometrical illustration of an assembly stand, belonging to an embodiment of an arrangement according to the invention, to be used in an embodiment of the method of the invention,
Figures 10 - 14 illustrate the various steps in an embodiment of the method according to the invention for mounting the casing on the assembly site, and
Figure 15 illustrates a finished hollow body, which in this exemplary case is a cooling tower.

### DETAILED DESCRIPTION OF INVENTION

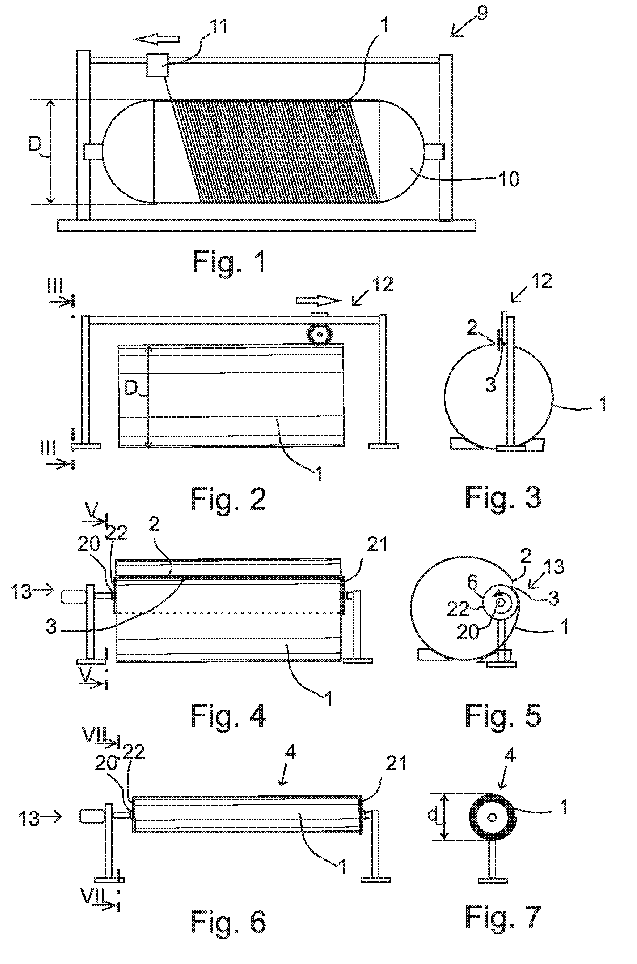

Figure 1 is a schematical illustration of a regular filament winding device 9 used for manufacturing large-size cylindrical filament reinforced plastic composite hollow bodies, such as tank shells, reactors, towers, pipes, chimneys, columns etc. casing shells used in the chemical and metallurgical industry. The device includes a rotatable mandrel 10, the outside diameter of which corresponds to the inside diameter of a finished hollow body. The device is provided with a movable filament dispenser 11, which feeds filament dipped in thermoplastic on the rotary mandrel 10 in a desired shape and as a suitable number of layers, in a desired thickness. The thermoplastic can be for example epoxy resin, polyester resin, vinyl ester resin or phenolic resin. The filament can be glass or carbon filament, and in structure, it can be cut filament, roving yarn, woven texture or mat.

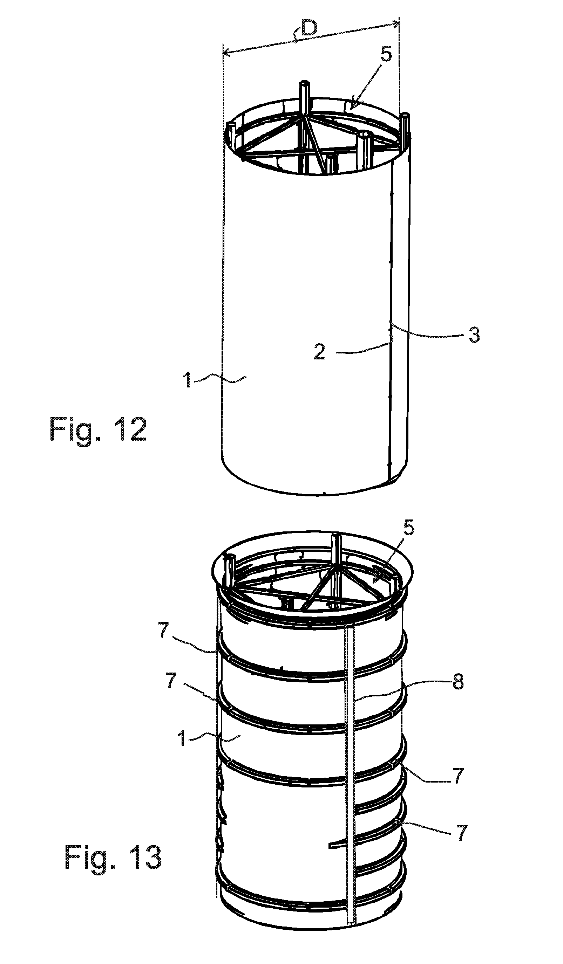

The thickness, in which the casing 1 is wound, is selected according to the minimum bending radius required by the diameter of the transport package 4 (cf. also Figures 5 - 8), so that the casing could be easily and undamaged bent on the capstan body 6. For instance when manufacturing a cylinder casing 1, with a diameter D being 6 meters, there is selected a thickness of roughly 4 - 8 mm, preferably 6 mm. Thus the casing 1 can be rolled as a transport package 4 illustrated in Figures 5 - 8, which fits in a 2.6 m wide ISO freight container. However, because said thickness 6 mm is possibly not sufficient in the final, assembled hollow body, with respect to structural rigidity and strength, there may be needed additional reinforcement elements 7, 8 (Figure 13), to be installed on the assembly site.

When a desired thickness is reached for the casing 1, the mandrel 10 with the casing 1 is in the regular way put in a furnace (not illustrated) for curing the resin. When the resin is set, the mandrel 10 is removed. Then the hollow cylindrical casing 1 is shifted to the cutting device 12, illustrated in Figures 2 and 3, for cutting the casing 1 open in the axial direction, so that two ends 2, 3 are formed in the casing.

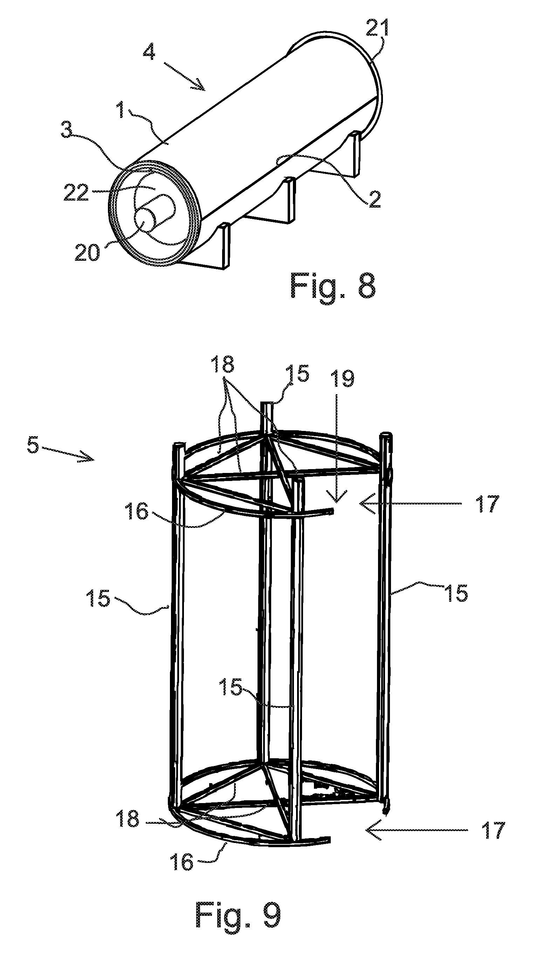

Figure 4 is a schematical illustration of a rolling device 13, by which the open-cut casing 1 can be rolled up around the capstan body 6 for forming a transport package 4 (Figures 4 - 6), said transport package 4 having a diameter d that is essentially smaller than the diameter D of the finished hollow body (cf. Figure 7). As can be seen for example from Figures 5 and 8, the capstan body 6 includes a shaft 20. A circular end flange 21 is attached to the shaft 20. The diameter of the end flange 21 is at least as large as the diameter d of the casing 1 wound on the capstan body 6. To the shaft 20, there is fastened a core 22, around which the casing 1 is wound.

Figure 8 shows a finished transport package 4, which is supported in a horizontal position by support elements. The measures of the transport package 4 are adjusted to match a standard-sized ISO freight container. Then it can be transported to the assembly site in an ISO freight container.

Figure 9 illustrates an assembly stand 5, which is used as mounting jig for the hollow body on the assembly site. The outside diameter of the assembly stand 5 corresponds to inside diameter of the finished hollow body. The assembly stand 5 is arranged to receive inside it the transport package 4 for unrolling the casing 1 on the assembly stand 5.

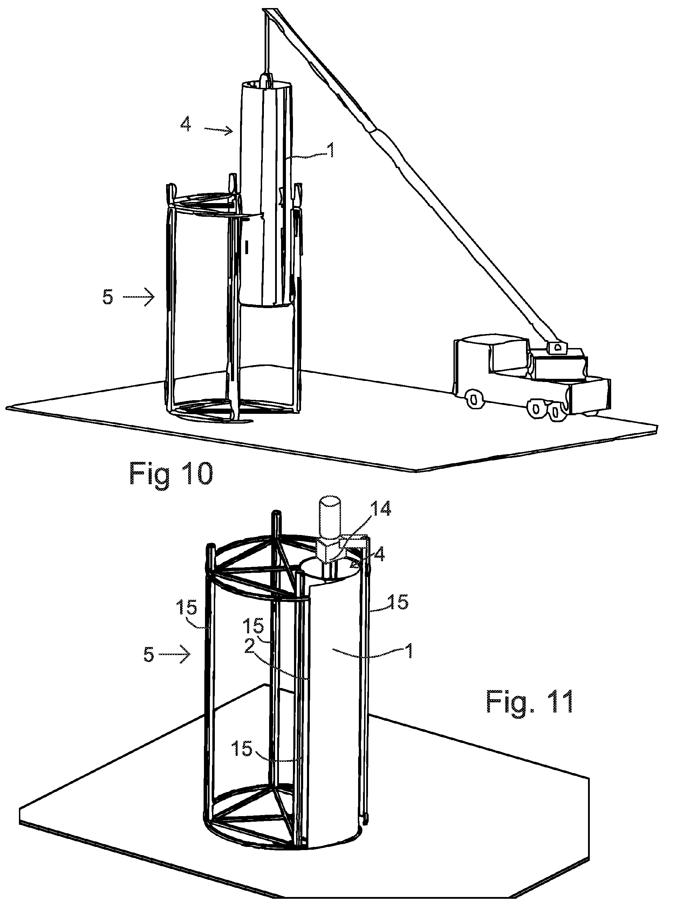

From Figure 9 it is seen that the assembly stand 5 includes a rigid frame. The frame comprises four vertical columns 15, which are arranged in a circular configuration with respect to each other and radially with respect to the vertical central axis of the assembly stand 5. Two horizontal support rings 16 are attached at the bottom and top ends of the columns. The columns 15 are attached on the inner track of the support rings 16. The outside diameter of the support rings 16 corresponds to the inside diameter of the finished tank. At the support rings 16, there are arranged horizontal supports 18 that attach the mutually facing and adjacent columns 15 to each other. In between the horizontal supports 18 and inside the space defined by the support rings 16, there is formed a reception space 19, in which the transport package 4 can be set inside the assembly stand 5 according to Figures 10 and 11, so that the outside track of the transport package 4 touches the outside track of the support rings 16 at the openings 17 provided in the support rings 16, and thus the casing 1 can, through the openings 17, be fed from the transport package 4 onto the assembly stand 5, as is illustrated in Figure 11. The assembly stand 5 can also include an actuator 14 illustrated schematically in Figure 11, which actuator 14 is arranged to be connected at the end of the shaft 20 for rotating the capstan body 6, so that the casing 1 can be brought around the assembly stand 5.

In Figure 12, the ends 2, 3 of the casing 1 are matched end-on-end, so that the ends 2, 3 can be laminated together by a tight-fitting seam for forming an endless casing 1.

Figure 13 illustrates a step where on the outer track of a casing 1 formed in a cylindrical endless shape, there are attached reinforcement elements 7, 8, such as stiffening rings 7, lengthwise stiffening ribs 8 or the like, for improving the structural strength and rigidity of the casing.

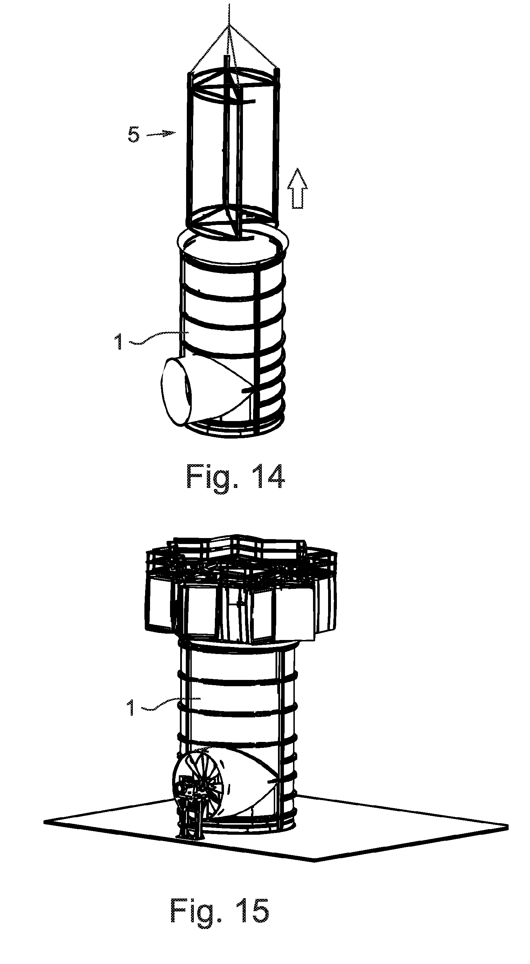

In Figure 14, the assembly stand 5 is removed from the hollow body.

Finally other required elements are attached to the casing 1.

Figure 15 illustrates a finished hollow body, which in this example is a cooling tower, the technique of which is explained in more detail in the publication WO2007/096457 A2 by the same applicant.

The invention is not restricted to the above described embodiments only, but many modifications are possible within the scope of the inventive idea defined in the claims.

## Claims

1. A method for manufacturing and assembling a large-size filament-reinforced plastic composite hollow body, in which method:
- the casing (1) of the hollow body is manufactured by filament winding in an essentially cylindrical shape, so that the casing diameter corresponds to the diameter of the finished hollow body,
- the endless casing (1) manufactured by filament winding is cut open in the axial direction, so that two ends (2, 3) are formed in the casing,
- the open-cut casing (1) is rolled up in order to form a transport package (4) with a diameter that is essentially smaller than the diameter of the finished hollow body,
- the transport package (4) is transported to the assembly site,
- on the assembly site, the transport package (4) is set inside an assembly stand (5), the outer dimensions of which are arranged to correspond to the inside diameter of the finished hollow body, and the casing (1) is unrolled around the assembly stand (5) to the size of the finished hollow body, so that the casing ends (2, 3) are matched end-on-end,
- the ends (2, 3) of the casing (1) are mutually fastened by a tight-fitting seam for forming an endless casing, and
- other required elements are fastened to the casing (1) for forming the finished hollow body.

2. A method according to claim 1, **characterized** in that the casing (1) is manufactured by filament winding to a thickness that is selected according to the minimum bending radius required by the diameter of the transport package (4).

3. A method according to claim 2, **characterized** in that the casing (1) is manufactured by filament winding to a thickness that is roughly 4 - 8 mm, preferably roughly 6 mm.

4. A method according to any of the claims 1 - 3, **characterized** in that the open-cut casing (1) is rolled up on a capstan body (6) in order to form a transport package (4) with a diameter that is essentially smaller than the diameter of the finished hollow body.

5. A method according to any of the claims 1 - 4, **characterized** in that after the casing (1) is on the assembly site formed in an endless shape, on the outer track of the casing there are attached reinforcement elements (7, 8), such as stiffening rings (7), stiffening ribs (8) and the like, for improving the structural strength and rigidity of the casing.

6. A method according to any of the claims 1 - 5, **characterized** in that the measures of the transport package (4) are adjusted to match the measures of a standardized ISO freight container.

7. A method according to claim 6, **characterized** in that the transport package (4) is transported to the assembly site in an ISO freight container.

8. A method according to any of the claims 1 - 7, **characterized** in that on the assembly site, the transport package (4) is set in a vertical position in a vertical assembly stand (5).

9. A method according to any of the claims 4 - 8, **characterized** in that the capstan body (6) is rotated around its axis for unrolling the casing around the assembly stand (5).

10. A method according to any of the claims 1 - 9, **characterized** in that the casing ends (2, 3) are mutually attached by laminating reinforced plastic mat for forming a seam.

11. An arrangement for manufacturing a large-size filament-reinforced plastic composite hollow body, such as a tank, said arrangement comprising:
- a filament winding device (9), which includes a rotatable mandrel (10), the outside diameter of which corresponds to the inside diameter of a finished hollow body, and a filament dispenser (11) for feeding filament on the rotary mandrel (10) in order to make the hollow body casing (1) essentially cylindrical in shape, so that the diameter of the casing corresponds to the diameter of the finished hollow body,
- a cutting device (12) for cutting open the endless casing (1), manufactured by filament winding, in the axial direction, and
- a rolling device (13) for rolling up the casing (1) in order to form a transport package (4) with a diameter essentially smaller than the diameter of a finished hollow body,
**characterized** in that the arrangement includes an assembly stand (5), the outside diameter of which corresponds to the inside diameter of a finished hollow body, and which is arranged to receive inside it the transport package (4) for unrolling the casing (1) on the assembly stand (5).

12. An arrangement according to claim 11, **characterized** in that the arrangement includes a capstan body (6), around which the open-cut casing (1) can be wrapped to form the transport package (4); and that the assembly stand (5) is arranged to receive inside it the capstan body (6) for unrolling the casing (1) on the assembly stand (5).

13. An arrangement according to claim 11 or 12, **characterized** in that the assembly stand (5) includes an actuator (14), which is arranged to rotate the capstan body (6).

14. An arrangement according to any of the claims 11 - 13, **characterized** in that the assembly stand (5) comprises a rigid frame, including:
- a number of columns (15), which are arranged in a mutually circular configuration and radially with respect to the vertical central axis of the assembly stand,
- at least two spaced-apart horizontal support rings (16), on the inner track of which the columns (15) are attached, the outside diameter of said support rings corresponding to the inside diameter of a finished tank, both of said support rings being provided with an opening (17), and
- a number of horizontal supports (18), which are arranged to fasten the mutually facing and adjacent columns (15) to each other;
- and in that in between the horizontal supports (18) and inside the space defined by the support rings (16), there is formed a reception space (19) for receiving the transport package (4) inside the assembly stand (5), so that the outer track of the transport package (4) touches the outer track of the support rings (16) at the openings (17), in which case the casing (1) can be fed, through the openings (17), from the transport package (5) on the assembly stand (6).

15. An arrangement according to any of the claims 11 - 14, **characterized** in that the capstan body (6) includes:
- a shaft (20),
- a circular end flange (21), which is fastened to the shaft (20) and the diameter whereof is at least as large as the diameter of the casing (1) wound on the capstan body,
- a core (22), which is attached to the shaft (20) and around which core the casing (1) can be wound.

16. An arrangement according to claim 15, **characterized** in that an actuator (14) is arranged to be connected to the shaft (20) for rotating the capstan body (6).

## Patentansprüche

1. Verfahren zur Herstellung und Montage eines großvolumigen, faserverstärkten Hohlkörpers aus Kunststoffverbund, wobei in dem Verfahren:
- die Mantelfläche (1) des Hohlkörpers durch Faserwicklung in einer im Wesentlichen zylindrischen Form hergestellt wird, so dass der Durchmesser der Mantelfläche (1) dem Durchmesser des fertig gestellten Hohlkörpers entspricht,
- die endlose, durch Faserwicklung hergestellte Mantelfläche (1) in der axialen Richtung aufgeschnitten wird, so dass zwei Enden (2, 3) in der Mantelfläche ausgebildet werden,
- die aufgeschnittene Mantelfläche (1) zur Ausbildung eines Transportpakets (4) aufgerollt wird, dessen Durchmesser wesentlich kleiner ist als der Durchmesser des fertig gestellten Hohlkörpers,
- das Transportpaket (4) zum Montageort transportiert wird,
- das Transportpaket (4) am Montageort in einem Montagegestell (5) platziert wird, dessen äußere Abmessungen so beschaffen sind, dass sie dem Innendurchmesser des fertig gestellten Hohlkörpers entsprechen, die Mantelfläche (1) bis zu der Größe des fertig gestellten Hohlkörpers um das Montagegestell (5) herum aufgerollt wird, so dass die Enden (2, 3) der Mantelfläche (1) exakt aneinander anstoßen,
- die Enden (2, 3) der Mantelfläche (1) zur Ausbildung einer endlosen Mantelfläche mittels einer passgenauen Fügestelle miteinander verbunden werden, und
- weitere benötigte Elemente zur Ausbildung des fertig gestellten Hohlkörpers an der Mantelfläche (1) befestigt werden.

2. Verfahren nach Anspruch 1, **dadurch gekennzeichnet, dass** die Herstellung der Mantelfläche (1) durch Faserwicklung bis zu einer Dicke erfolgt, die gemäß dem minimalen Biegeradius gewählt ist, der zum Erreichen des Durchmessers des Transportpakets (4) gefordert ist.

3. Verfahren nach Anspruch 2, **dadurch gekennzeichnet, dass** die Herstellung der Mantelfläche (1) durch Faserwicklung bis zu einer Dicke erfolgt, die in etwa 4 - 8 mm, bevorzugt in etwa 6 mm beträgt.

4. Verfahren nach einem der Ansprüche 1 - 3, **dadurch gekennzeichnet, dass** die aufgeschnittene Mantelfläche (1) zur Ausbildung eines Transportpakets (4), dessen Durchmesser wesentlich kleiner ist als der Durchmesser des fertig gestellten Hohlkörpers, auf einen Windenkörper (6) aufgerollt wird.

5. Verfahren nach einem der Ansprüche 1 - 4, **dadurch gekennzeichnet, dass** im Anschluss an die am Montageort erfolgte Ausbildung der Mantelfläche (1) in einer endlosen Form an dem äußeren Umfang der Mantelfläche Verstärkungselemente (7, 8) befestigt werden, wie z. B. Versteifungsringe (7), Versteifungsrippen (8) und dergleichen, um so die strukturelle Festigkeit und Rigidität der Mantelfläche zu verbessern.

6. Verfahren nach einem der Ansprüche 1 - 5, **dadurch gekennzeichnet, dass** die Abmessungen des Transportpakets (4) an die Abmessungen eines nach ISO genormten Frachtcontainers angepasst sind.

7. Verfahren nach Anspruch 6, **dadurch gekennzeichnet, dass** das Transportpaket (4) in einem nach ISO genormten Frachtcontainer zum Montageort transportiert wird.

8. Verfahren nach einem der Ansprüche 1 - 7, **dadurch gekennzeichnet, dass** das Transportpaket (4) am Montageort in einem vertikalen Montagegestell (5) in einer vertikalen Position aufgestellt wird.

9. Verfahren nach einem der Ansprüche 4 - 8, **dadurch gekennzeichnet, dass** der Windenkörper (6) um seine Achse rotiert wird, um so die Mantelfläche um das Montagegestell (5) herum aufzurollen.

10. Verfahren nach einem der Ansprüche 1 - 9, **dadurch gekennzeichnet, dass** die Enden (2, 3) der Mantelfläche (1) durch das Laminieren einer verstärkten Kunststoffmatte zur Ausbildung einer Fügestelle aneinander befestigt werden.

11. Anordnung zur Herstellung eines großvolumigen, faserverstärkten Hohlkörpers aus Kunststoffverbund, wie z. B. eines Tanks, umfassend:
- eine Faserwicklungsvorrichtung (9), einschließend eine drehbare Dornachse (10), deren Außendurchmesser dem Innendurchmesser eines fertig gestellten Hohlkörpers entspricht, und eine Faserdispensiervorrichtung (11) zur Zufuhr von Fasern auf die drehbare Dornachse (10), um die Form der Mantelfläche (1) des Hohlkörpers im Wesentlichen zylindrisch auszubilden, so dass der Durchmesser der Mantelfläche (1) dem Durchmesser des fertig gestellten Hohlkörpers entspricht,
- eine Schneidvorrichtung (12) zum Aufschneiden der endlosen, durch Faserwicklung hergestellten Mantelfläche (1) in der axialen Richtung, und
- eine Aufrollvorrichtung (13) zum Aufrollen der Mantelfläche (1) zur Ausbildung eines Transportpakets (4) mit einem Durchmesser, der wesentlich kleiner ist als der Durchmesser eines fertig gestellten Hohlkörpers,
**dadurch gekennzeichnet, dass** die Anordnung einschließt: ein Montagegestell (5), dessen Außendurchmesser dem Innendurchmesser eines fertig gestellten Hohlkörpers entspricht und das zur Aufnahme des Transportpakets (4) zum Aufrollen der Mantelfläche (1) auf das Montagegestell (5) in dessen Innerem vorgesehen ist.

12. Anordnung nach Anspruch 11, **dadurch gekennzeichnet, dass** die Anordnung einen Windenkörper (6) einschließt, um den die aufgeschnittene Mantelfläche (1) zur Ausbildung des Transportpakets (4) gewickelt werden kann; und dass das Montagegestell (5) zur Aufnahme des Windenkörpers (6) zum Aufrollen der Mantelfläche (1) auf das Montagegestell (5) in dessen Innerem vorgesehen ist.

13. Anordnung nach Anspruch 11 oder 12, **dadurch gekennzeichnet, dass** das Montagegestell (5) einen Stellmotor (14) einschließt, der zur Rotation des Windenkörpers (6) vorgesehen ist.

14. Anordnung nach einem der Ansprüche 11 - 13, **dadurch gekennzeichnet, dass** das Montagegestell (5) einen starren Rahmen umfasst, einschließend:
- eine Reihe von Säulen (15), die jeweils einander gegenüberliegend in einer kreisförmigen Konfiguration sowie radial bezüglich der vertikalen Mittenachse des Montagegestells (5) angeordnet sind,
- mindestens zwei voneinander räumlich getrennte horizontale Stützringe (16), an deren innerem Umfang die Säulen (15) befestigt sind, wobei der Außendurchmesser der Stützringe (16) dem Innendurchmesser eines fertig gestellten Tanks entspricht und beide der Stützringe (16) mit einer Öffnung (17) versehen sind, und
- eine Reihe von horizontalen Stützelementen (18), die angeordnet sind, um jeweils einander gegenüberliegende und benachbarte Säulen (15) aneinander zu befestigen, und **dadurch gekennzeichnet, dass** zwischen den horizontalen Stützelementen (18) sowie innerhalb des durch die Stützringe (16) definierten Raums ein Aufnahmeraum (19) zur Aufnahme des Transportpakets (4) im Inneren des Montagegestells (5) ausgebildet ist, so dass der äußere Umfang des Transportpakets (4) den äußeren Umfang der Stützringe (16) an den Öffnungen (17) berührt, wobei in diesem Fall die Mantelfläche (1) durch die Öffnungen (17) von dem Transportpaket (4) auf das Montagegestell (5) aufgerollt werden kann.

15. Anordnung nach einem der Ansprüche 11 - 14, **dadurch gekennzeichnet, dass** der Windenkörper (6) einschließt:
- eine Welle (20),
- einen an der Welle (20) befestigten, kreisförmigen Schlussflansch (21), dessen Durchmesser mindestens so groß ist wie der Durchmesser der auf den Windenkörper (6) gewickelten Mantelfläche (1),
- einen Kern (22), der an der Welle (20) befestigt ist und um den die Mantelfläche (1) gewickelt werden kann.

16. Anordnung nach Anspruch 15, **dadurch gekennzeichnet, dass** ein Stellmotor (14) zur Verbindung mit der Welle (20) vorgesehen ist, um den Windenkörper (6) zu rotieren.

## Revendications

1. Procédé de fabrication et d'assemblage d'un corps creux de taille importante en composite plastique renforcé par des filaments, procédé, dans lequel :
- l'enveloppe (1) du corps creux est fabriquée par enroulement de filaments sous une forme essentiellement cylindrique, de façon que le diamètre de l'enveloppe correspond au diamètre du corps creux fini,
- l'enveloppe sans fin (1) fabriquée par enroulement de filaments est ouverte par découpage dans le sens axial, de façon que deux extrémités (2, 3) sont formées dans l'enveloppe,
- l'enveloppe ouverte par découpage (1) est enroulée afin de former une bobine de transport, dont le diamètre est essentiellement plus petit que le diamètre du corps creux fini,
- la bobine de transport (4) est transportée sur le lieu d'assemblage,
- sur le lieu d'assemblage, la bobine de transport (4) est placée dans un châssis d'assemblage (5), dont les dimensions extérieures sont prévues de façon à correspondre au diamètre intérieur du corps creux fini et l'enveloppe (1) est déroulée autour du châssis d'assemblage (5) jusqu'à la taille du corps creux fini, de façon que les extrémités de l'enveloppe (2, 3) se joignent bout à bout,
- les extrémités (2, 3) de l'enveloppe (1) sont fixées l'une à l'autre par une jonction ajustée pour former une enveloppe sans fin et
- d'autres éléments nécessaires sont fixés à l'enveloppe (1) pour former le corps creux fini.

2. Procédé suivant la revendication 1, **caractérisé en ce que** l'enveloppe (1) est fabriquée par enroulement de filaments jusqu'à une épaisseur qui est sélectionnée selon le rayon de courbure minimal requis par le diamètre de la bobine de transport (4).

3. Procédé suivant la revendication 2, **caractérisé en ce que** l'enveloppe (1) est fabriquée par enroulement de filaments jusqu'à une épaisseur qui est de 4 à 8 mm environ, de préférence de 6 mm environ.

4. Procédé suivant une quelconque des revendications 1 à 3, **caractérisé en ce que** l'enveloppe (1) ouverte par découpage est enroulée sur un corps de cabestan (6) de façon à former une bobine de transport (4) avec un diamètre qui est essentiellement plus petit que le diamètre du corps creux fini.

5. Procédé suivant une quelconque des revendications 1 à 4, **caractérisé en ce qu**'une fois l'enveloppe (1) constituée, sur le site d'assemblage, sous une forme sans fin, des éléments de renfort (7, 8), tels que des anneaux de rigidification (7), des nervures de rigidification (8) et similaires sont formés sur la surface extérieure de l'enveloppe pour améliorer la force structurelle et la rigidité de celle-ci.

6. Procédé suivant une quelconque des revendications 1 à 5, **caractérisé en ce que** les dimensions de la bobine de transport (4) sont ajustées de façon à correspondre aux dimensions d'un conteneur de fret standardisé ISO.

7. Procédé suivant la revendication 6, **caractérisé en ce que** la bobine de transport (4) est transportée au site d'assemblage dans un conteneur de fret ISO.

8. Procédé suivant une quelconque des revendications 1 à 7, **caractérisé en ce que** sur le site d'assemblage, la bobine de transport (4) est placée en position verticale dans un châssis d'assemblage vertical (5).

9. Procédé suivant une quelconque des revendications 4 à 8, **caractérisé en ce que** le corps de cabestan (6) est entraîné en rotation autour de son axe pour dérouler l'enveloppe autour du châssis d'assemblage (5).

10. Procédé suivant une quelconque des revendications 1 à 9, **caractérisé en ce que** les extrémités de l'enveloppe (2, 3) sont fixées l'une à l'autre en laminant la natte plastique renforcée afin de former une jonction.

11. Agencement destiné à la fabrication d'un corps creux en composite plastique renforcé par des filaments, tels qu'un réservoir, ledit agencement comprenant :
- un dispositif d'enroulement de filaments (9), qui comprend un mandrin rotatif (10), dont le diamètre extérieur correspond au diamètre intérieur d'un corps creux fini et un distributeur de filaments (11) pour amener des filaments au mandrin rotatif (10) afin de donner à l'enveloppe (1) du corps creux une forme essentiellement cylindrique de façon que le diamètre de l'enveloppe correspond au diamètre du corps creux fini,
- un dispositif de découpage (12) pour ouvrir par découpage l'enveloppe sans fin (1) fabriquée par enroulement de filaments dans le sens axial, et
- un dispositif d'enroulement (13) pour enrouler l'enveloppe (1) de façon à former une bobine de transport (4) avec un diamètre essentiellement plus petit que le diamètre du corps creux fini, **caractérisé en ce que** l'agencement comporte un châssis d'assemblage (5), dont le diamètre extérieur correspond au diamètre intérieur d'un corps creux fini et qui est conçu pour recevoir à l'intérieur la bobine de transport (4) pour dérouler l'enveloppe (1) sur le châssis d'assemblage (5).

12. Agencement suivant la revendication 11, **caractérisé en ce qu**'il comporte un corps de cabestan (6), autour duquel l'enveloppe ouvert par découpage (1) peut être enroulée afin de former la bobine de transport (4) et en ce que le châssis d'assemblage (5) est conçu pour recevoir à l'intérieur le corps de cabestan (6) pour dérouler l'enveloppe (1) sur le châssis d'assemblage (5).

13. Agencement suivant la revendication 11 ou 12, **caractérisé en ce que** le châssis d'assemblage (5) comporte un actionneur (14), qui est prévu pour entraîner en rotation le corps de cabestan (6).

14. Agencement suivant une quelconque des revendications 11 à 13, **caractérisé en ce que** le châssis d'assemblage (5) comprend un cadre rigide comportant :
- plusieurs colonnes (15), qui sont disposées selon une organisation circulaire et radialement par rapport à l'axe central vertical du châssis d'assemblage,
- au moins deux anneaux de support horizontaux (16) espacés l'un de l'autre, sur la surface intérieure desquels sont fixées les colonnes (15), le diamètre extérieur desdits anneaux de support correspondant au diamètre intérieur d'un réservoir fini, chacun desdits anneaux de support étant pourvu d'une ouverture (17), et
- plusieurs supports horizontaux (18) qui sont prévus pour fixer, les unes aux autres, les colonnes (15) qui se font face et sont adjacentes,
- et en ce qu'entre les supports horizontaux (18) et à l'intérieur de l'espace défini par les anneaux de support (16) est formé un espace de réception (19) destiné à recevoir la bobine de transport (4) à l'intérieur du châssis d'assemblage (5) de façon que la surface extérieure de la bobine de transport (4) touche la surface extérieure des anneaux de support (16) au niveau des ouvertures (17), cas dans lequel l'enveloppe (1) peut être amenée à travers les ouvertures (17) depuis la bobine de transport (5) sur le châssis d'assemblage (6).

15. Agencement suivant une quelconque des revendications 11 à 14, **caractérisé en ce que** le corps de cabestan (6) comporte :
- un arbre (20)
- une bride d'extrémité circulaire (21) qui est fixée à l'arbre (20) et dont le diamètre est au moins aussi large que le diamètre de l'enveloppe (1) enroulée autour du corps de cabestan,
- un noyau (22) qui est fixé à l'arbre (20) et autour duquel l'enveloppe (1) peut être enroulée.

16. Agencement suivant la revendication 15, **caractérisé en ce qu**'un actionneur (14) est disposé de façon à être relié à l'arbre (20) pour entraîner en rotation le corps de cabestan (6).
